# FASCICULE DE BREVET EUROPEEN

(11) **EP 3 901 422 B1**
(45) Date de publication et mention de la délivrance du brevet: **10.04.2024**
(21) Numéro de dépôt: 21158475.0
(22) Date de dépôt: 22.02.2021
(51) Int. Cl.: F01D 25/18, F16H 57/04, F01D 15/12

(54) **PIGNON AVEC UN DISPOSITIF DE LUBRIFICATION**
RITZEL MIT EINER SCHMIERVORRICHTUNG
PINION WITH A LUBRICATION DEVICE

(30) Priorité: 22.04.2020 FR 2004000
(43) Date de publication de la demande: 27.10.2021
(73) Titulaire: Safran Transmission Systems, 92700 Colombes (FR)
(72) Inventeur: MORELLI, Boris Pierre Marcel, 77550 MOISSY-CRAMAYEL (FR); PELTIER, Jordane Emile André, 77550 MOISSY-CRAMAYEL (FR)
(74) Mandataire: Cabinet Camus Lebkiri

(56) Documents cités:
- DE-B- 1 273 914
- FR-A- 896 079
- US-A- 3 424 022
- US-A1- 2007 175 706

## Description

### DOMAINE TECHNIQUE DE L'INVENTION

Le domaine technique de l'invention est celui des pignons et plus particulièrement ceux utilisés pour les turbomachines d'aéronef, en particulier ceux associés au domaine des systèmes d'entrainement d'accessoires ou « accessory gearbox » (ADT), et plus particulièrement ceux associés au domaine des systèmes de lubrification et des carters des boites de transfert ou « transfert gearbox » (TGB).

### ARRIERE-PLAN TECHNOLOGIQUE DE L'INVENTION

Dans les turbomachines, une partie de la puissance générée est utilisée pour entraîner différents accessoires, nécessaires au fonctionnement de la turbomachine ou de l'aéronef, tels qu'un générateur électrique, une pompe de lubrification ou encore une pompe à carburant.

A cet effet, la turbomachine comporte généralement un boitier d'engrenage d'entrée (IGB : Inlet Gear Box), un arbre d'entraînement radial (RDS : Radial Drive Shaft), un boîtier d'engrenage de transfert (TGB : Transfer Gear Box) et un boitier d'engrenage d'accessoires (AGB : Accessory Gear Box) supportant les différents accessoires.

Lorsque l'arbre moteur est entraîné en rotation, il entraine mécaniquement les différents accessoires par l'intermédiaire de I'IGB, du RDS, du TGB puis de l'AGB. L'IGB et le TGB assurent un renvoi d'angle qui permet de passer d'un système de rotation longitudinal à un système de rotation transversal sur une même turbomachine par des mécanismes d'engrenages. Les engrenages de I'IGB et de la TGB sont généralement carénés par un déflecteur en tôle qui permet d'orienter le flux d'air généré par la ventilation de l'engrènement afin, d'une part, de protéger les écoulements d'huile gravitaires environnants, et d'autre part, d'éliminer l'huile de lubrification des engrènements de flux d'air.

L'AGB transmet le mouvement de rotation des différents accessoires par une combinaison d'engrenages appelée train d'engrenages. L'ensemble formé par l'AGB et les accessoires peut être positionné dans le carter de la turbomachine, à proximité de la soufflante dans une zone appelée « zone fan » ou encore dans une zone « core » c'est-à-dire dans une zone centrale de la turbomachine, autour du compresseur haute pression.

Dans les boites TGB, il est nécessaire pour des raisons de fonctionnement (grippage, échauffement...) de lubrifier l'engrènement. La vitesse de rotation des pignons est un facteur de mauvaise lubrification car elle empêche le jet du lubrifiant, envoyée par un gicleur, d'atteindre le point d'engrènement. Le jet du lubrifiant étant « coupé » par les dents avant d'arriver sur les flancs de dents.

Aujourd'hui pour lubrifier un engrènement de pignon on utilise le jet d'un gicleur qui vise l'engrènement par l'extérieur et pour éviter les problèmes de barbotage et de barattage on utilise un déflecteur tel que décrit dans les demandes FR 3 055 028 et FR 19 000 057. Cependant ce système n'est pas satisfaisant car à cause de la longueur du jet car celui-ci, trop éloigné des dents, est dévié ou « cassé » par le vent dû à la rotation des pignons. C'est pourquoi, pour garantir une lubrification suffisante il est alors nécessaire d'utiliser une quantité importante de lubrifiant.

Le document FR 896 079 A divulgue un pignon s'étendant autour d'un axe, comprenant un arbre et des dents portées par un voile qui s'étend autour de l'arbre et avec une entrée d'huile côté arbre et une sortie d'huile côté denture d'engrènement.

### RESUME DE L'INVENTION

L'invention offre une solution aux problèmes évoqués précédemment, en permettant d'améliorer l'apport du lubrifiant sur l'engrènement tout en limitant la quantité de lubrifiant nécessaire.

Le pignon selon l'invention est divulgué dans la revendication 1. La rotation du pignon va entraîner le lubrifiant vers la partie périphérique grâce à la force centrifuge et le propulser vers les dents en passant par les trous de sortie. On a ainsi un gicleur intégré au pignon et muni de plusieurs jets, ce qui permet d'apporter du lubrifiant au plus près de l'engrènement et d'éviter toute interférence extérieure.

On entend par intérieur des dents, la partie des dents la plus proche de l'axe de rotation du pignon.

Comme le gicleur est centré/serré dans le pignon, il n'encombre pas l'engrenage. L'arrivée de lubrifiant est faite dans l'axe de rotation du pignon, il est plaqué sur les parois intérieures du pignon par la force centrifuge et descend jusqu'à un rebord prévu à cet effet permettant ainsi de réaliser un réservoir. Le lubrifiant est en général de l'huile. La couronne pourra, par exemple, avoir la forme d'un cône selon la forme intérieure du pignon.

Avantageusement, les trous de sortie sont placés en vis-à-vis d'un creux entre deux dents. Le lubrifiant est ainsi injecté directement au pied des dents et avec la force centrifuge le lubrifiant va migrer vers le haut de la dent et vers l'extérieur.

Avantageusement, le nombre de trous de sortie est égal au nombre de creux entre deux dents. Le lubrifiant est de cette façon injecté sur entre chacune des dents

Selon un mode de réalisation, le pignon est conique. Ce type de pignon est en particulier utilisé pour les renvois d'angle des boites de transfert. Le pignon pourrait également être droit.

Avantageusement, le dispositif de lubrification est de forme conique avec une base qui comprend l'arrivée de lubrifiant et un sommet qui comprend les trous de sortie et dans lequel la base constitue une partie périphérique interne et le sommet constituant une partie périphérique externe. Le lubrifiant est ainsi acheminé efficacement vers la partie périphérique externe.

Selon un premier mode de réalisation, le dispositif de lubrification comprend plusieurs conduits de distribution séparés entre l'arrivée du lubrifiant et les trous de sortie. Les différents conduits étant séparés les uns des autres, le dispositif de lubrification est ainsi allégé.

Selon un deuxième mode de réalisation, le dispositif de lubrification comprend une double paroi entre l'arrivée du lubrifiant et les trous de sortie. La fabrication est ainsi simplifiée.

Avantageusement, une des deux parois comprend des rainures. Ces rainures permettent de diriger le lubrifiant vers les trous de sortie et les creux entre les dents.

Avantageusement, le dispositif de lubrification est disposé entre les dents du pignon et l'arbre du pignon. L'encombrement est donc minimum.

Dans le cas où les dents du pignon sont au contraire disposées à l'extérieur de la paroi de l'axe du pignon, le dispositif de lubrification comprend une zone réservoir à l'intérieur de l'axe du pignon et une partie conique disposée à l'extérieur dudit axe pour aller alimenter les dents. Dans ce cas, la paroi de l'axe du pignon est percée en vis-à-vis de la partie conique.

L'invention concerne également un dispositif d'engrènement de deux pignons comprenant au moins un pignon avec au moins une des caractéristiques précédentes.

L'invention et ses différentes applications seront mieux comprises à la lecture de la description qui suit et à l'examen des figures qui l'accompagnent.

### BREVE DESCRIPTION DES FIGURES

Les figures sont présentées à titre indicatif et nullement limitatif de l'invention.
[Fig. 1] est une vue en coupe d'un engrenage à renvoi d'angle avec un dispositif de lubrification selon l'invention ;
[Fig. 2] est une vue de coté de l'engrenage de la figure 1 ;
[Fig. 3] est un pignon conique selon un premier mode de réalisation de l'invention ;
[Fig. 4] est une variante du pignon de la figure 3 ;
[Fig. 5] est une coupe d'un engrenage à renvoi d'angle avec un dispositif de lubrification selon un deuxième mode de réalisation de l'invention ;
[Fig. 6] montre le dispositif de lubrification de la figure 5 ;
[Fig. 7] est une première variante de la figure 5 ;
[Fig. 8] montre le dispositif de lubrification de la figure 7 ;
[Fig. 9] est une deuxième variante de la figure 5.

### DESCRIPTION DETAILLEE

Sauf précision contraire, un même élément apparaissant sur des figures différentes présente une référence unique.

L'engrenage 1 présenté sur les figures est une boite de transfert d'angle avec deux pignons coniques 2 et 3. Les deux pignons 2 et 3 sont creux.

Le premier pignon 2 est d'axe X et ses dents 20 sont placées sur un cône dans le prolongement d'une paroi cylindrique 25 d'axe X.

Le deuxième pignon 3 est d'axe Y et ses dents 30 sont placées à l'extérieur d'une paroi cylindrique 35 d'axe Y.

Chaque pignon présente des dents 20 et 30 disposées sur le pourtour du pignon et inclinées respectivement par rapport à l'axe X et Y. Les dents 20 et 30 présentent également une courbure radiale.

Les dents 20 et 30 s'engrenant les unes avec les autres un seul dispositif de lubrification est nécessaire pour les deux pignons. Il peut être situé indifféremment sur l'un ou l'autre des pignons.

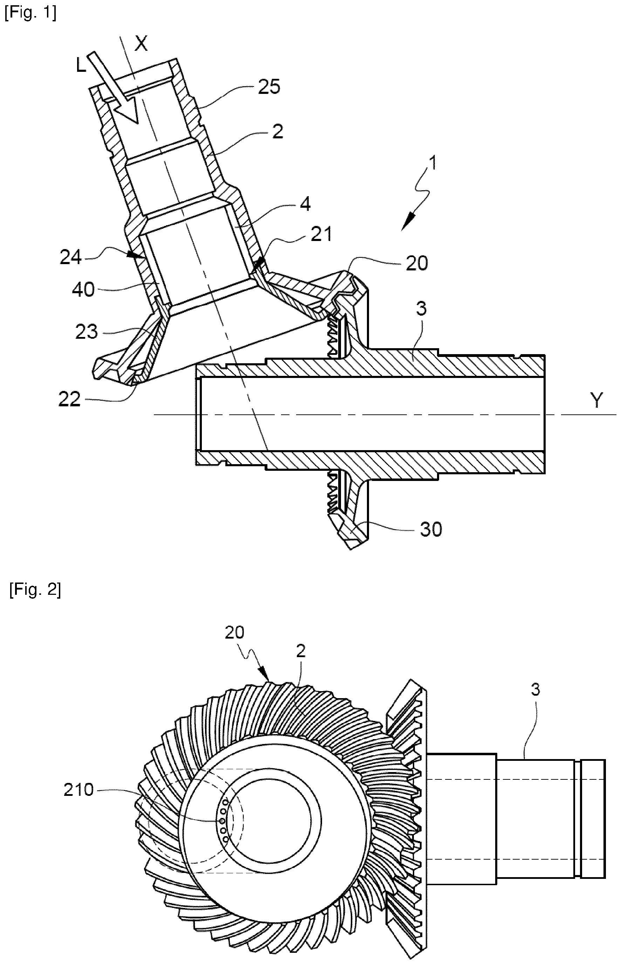

Aux figures 1 à 4, le dispositif de lubrification est disposé sur le pignon 2. Le pignon 2 comprend un rebord intérieur 21 sur lequel du lubrifiant 4 va s'accumuler pour servir d'arrivée dans le dispositif de lubrification. Le rebord 21 est percé de trous d'entrée 210 disposés axialement et reliés à une partie périphérique externe 22 par des conduits de distribution 23. La partie périphérique externe 22 est orientée avec une même inclinaison que les dents 20.

Le lubrifiant arrive selon la direction L dans le pignon 2 par un gicleur (non représenté), il va être plaqué sur les faces intérieures 24 du pignon 2 par la force centrifuge et va remplir la partie supérieure du rebord 21 constituant ainsi un réservoir 40.

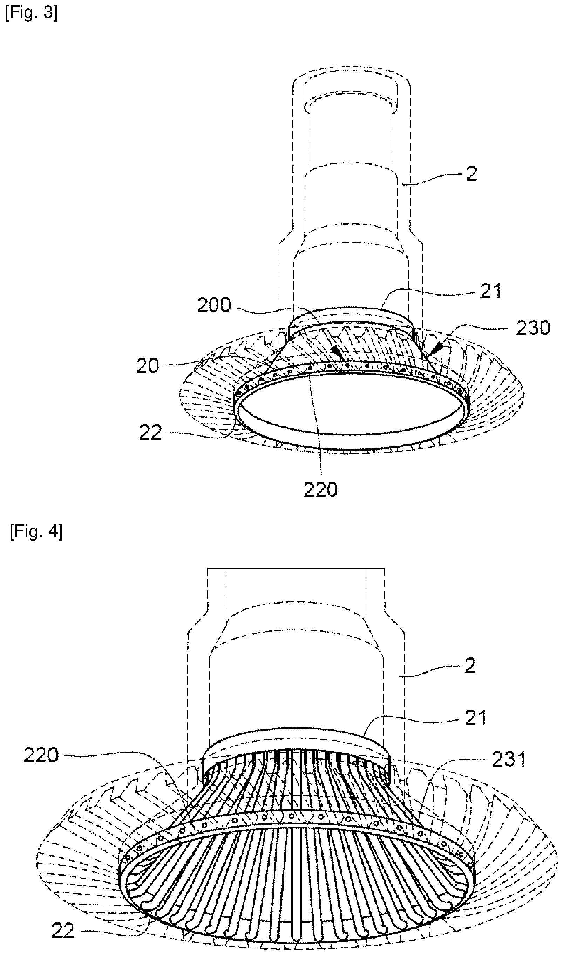

On peut voir sur la figure 3 que le dispositif de lubrification forme un cône 230 continu circonférenciellement et percé de plusieurs conduits 23 reliant le rebord 21 à la partie périphérique 22.

La partie périphérique externe 22 comprend des trous de sortie 220 disposés axialement, orientés avec la même inclinaison que les dents et dans un creux 200 entre deux dents 20. Le nombre de trous d'entrée 210 est égal au nombre de trous de sortie 220. Le dispositif de lubrification constitue ainsi un gicleur.

Dans la variante de la figure 4, le cône est constitué de plusieurs tubes 231 constituant des conduits 23 et espacés les uns des autres. Le nombre et la taille des tubes 231 varie en fonction du nombre de trous de sortie 220. Chacun des trous de sortie 220 est de préférence disposé en vis-à-vis d'un tube 231.

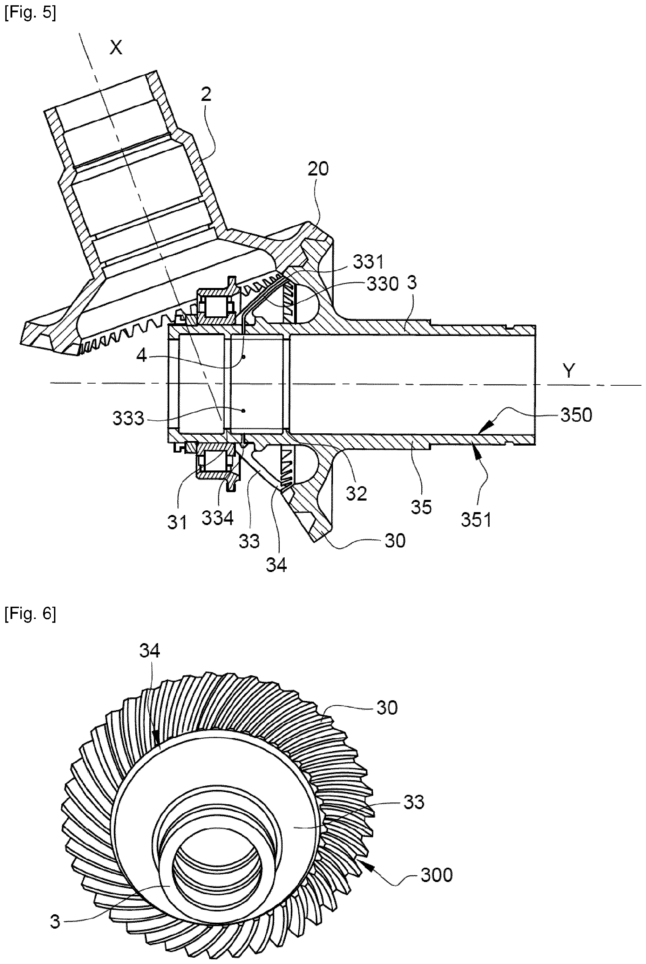

Dans le mode de réalisation illustré à la figure 5, le deuxième pignon 3 d'axe Y comprend une paroi cylindrique 35, d'axe Y, sur la face intérieur 350 de laquelle il y a deux rebords 31 et 32 qui vont permettre de garder du lubrifiant 4 à proximité des dents 30 et constituer ainsi un réservoir 40. La paroi cylindrique 35 comprend une face extérieure 351 sur laquelle sont placés en saillie les dents 30. Dans ce mode de réalisation, ces rebords 31 et 32 sont décalés par rapport aux dents 30.

La face intérieure 350 de la paroi 35 est percée de trous d'entrée 333 radiaux, disposés entre les deux rebords 31 et 32. Un cône 33 se terminant par une partie périphérique externe 34, relie les dents 30 aux trous d'entrée 333. Le cône 33 comprend une rainure périphérique 334 dans laquelle débouchent les trous d'entrée 333. Le cône 33 est percé de plusieurs conduits 330, chacun partant de la rainure périphérique 334 jusqu'à un trou de sortie 331, permettant l'amené du lubrifiant du réservoir 40 vers les dents 30. Les trous de sortie 331 sont placés entre deux dents 30.

La rainure 334 permet de limiter le nombre de trous d'entrée 333 à percer dans la paroi 35. En effet la rainure permet une répartition du lubrifiant sur tout le pourtour du pignon 3. Le nombre de trous d'entrée 333 peut donc être inférieur au nombre de trous de sortie 331.

Le nombre de trous d'entrée 333 peut aussi être égal au nombre de trous de sortie 331, dans ce cas la rainure périphérique 334 n'est pas nécessaire.

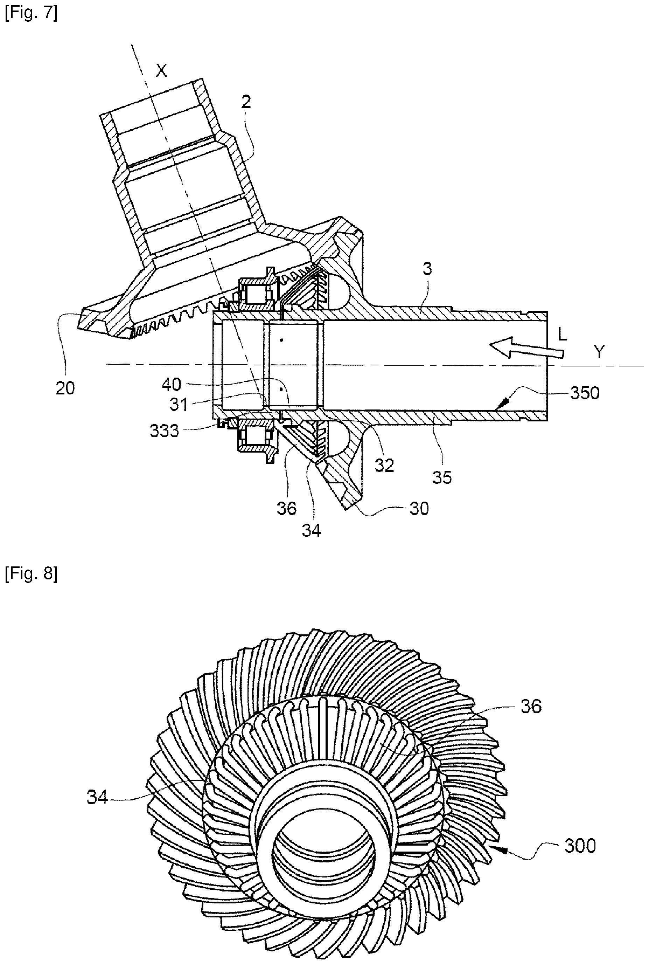

Dans la première variante illustrée figures 7 et 8, le cône 33 des figures 5 et 6 est remplacé par des tubes 36 répartis sur une surface conique correspondant à celle décrite par le cône 33. Le nombre de tubes 36 est égal au nombre de dents 30 et les tubes 36 sont placés en vis-à-vis d'un creux 300 entre deux dents 30.

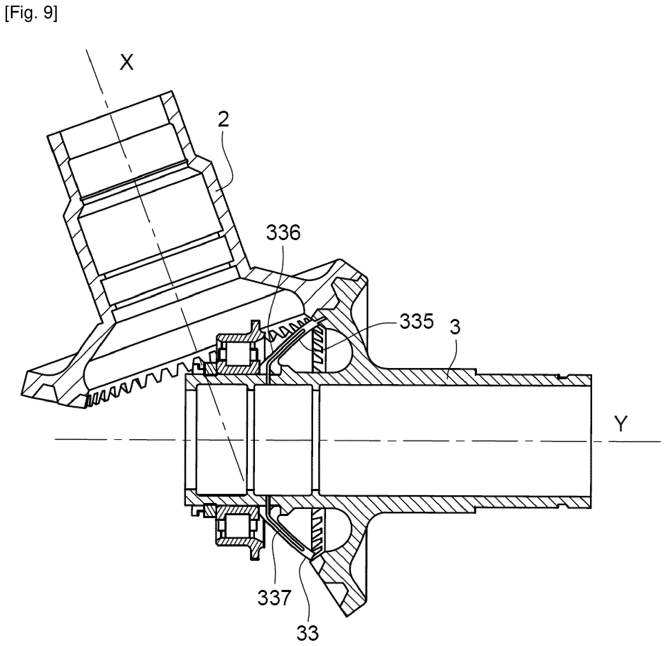

La deuxième variante de la figure 9 montre un dispositif de lubrification à double paroi. Dans cet exemple, le cône 33 est constitué de deux parois coniques 335 et 336 définissant un passage 337 pour le lubrifiant 4. Une des parois pourra comprendre des rainures du côté intérieur du passage 337 pour guider le lubrifiant. Les autres éléments sont identiques.

La fabrication de ce cône est simple, puisqu'il peut être réalisé avec des tôles embouties. Le cône décrit dans les exemples illustrés constitue une couronne qui peut avoir une forme différente.

Nous allons maintenant décrire le mode de fonctionnement du dispositif de lubrification. Quand les pignons 2 et 3 sont en mouvement, un gicleur envoie du lubrifiant, tel que de l'huile, selon l'orientation de la flèche L à l'intérieur d'un des pignons 2 ou 3, leur rotation plaque le lubrifiant sur la face intérieure 24 ou 350 des parois 25 et 35. Les rebords 21, ou 31 et 32 vont retenir le lubrifiant dans le réservoir 40. La force centrifuge va pousser le lubrifiant dans les trous d'entrée 210 ou 333, puis dans les conduits 23 ou 330 et les trous de sortie 220 ou 331 pour aller ensuite graisser toute la longueur des creux 200 et 300 entre les dents 20 et 30. Le dispositif de lubrification tournant avec le pignon et les trous de sortie étant disposés directement entre les dents, il n'y a pas de « coupe » du jet, la quantité d'huile est donc fournit au juste nécessaire.

## Revendications

1. Pignon (2, 3) creux s'étendant autour d'un axe, comprenant un arbre et des dents (20, 30) portées par un voile qui s'étend autour de l'arbre et un dispositif de lubrification, dans lequel le dispositif de lubrification forme une couronne séparée fixée à l'arbre avec une entrée d'huile côté arbre dans l'axe de rotation du pignon, le pignon est configuré de sorte que l'arrivée de lubrifiant est faite dans l'axe de rotation du pignon, qu'il est plaqué sur les parois intérieures du pignon par la force centrifuge et descend jusqu'à un rebord (21, 31, 32) " prévu à cet effet permettant ainsi de réaliser un réservoir (40) et une sortie d'huile côté denture d'engrènement et comprend une arrivée de lubrifiant en communication fluide avec un circuit de lubrification de l'arbre, le dispositif de lubrification comprenant des trous de sortie (220, 331) qui débouchent entre deux dents (20, 30) du pignon.

2. Pignon (2, 3) selon la revendication 1, **caractérisé en ce que** les trous de sortie (220, 331) sont placés en vis-à-vis d'un creux (200, 300) entre deux dents (20, 30).

3. Pignon (2, 3) selon la revendication précédente, **caractérisé en ce que** le nombre de trous de sortie (220, 331) est égal au nombre de creux (200, 300).

4. Pignon (2, 3) selon une des revendications précédentes, **caractérisé en ce que** le pignon est conique.

5. Pignon (2, 3) selon une des revendications précédentes, **caractérisé en ce que** le dispositif de lubrification est de forme conique avec une base qui comprend l'arrivée de lubrifiant et un sommet qui comprend les trous de sortie (220, 331) et dans lequel la base constitue une partie périphérique interne et le sommet constitue une partie périphérique externe (22, 34).

6. Pignon (2, 3) selon une des revendications précédentes, **caractérisé en ce que** le dispositif de lubrification comprend plusieurs conduits de distribution séparés entre l'arrivée du lubrifiant et les trous de sortie (220, 331).

7. Pignon (2, 3) selon une des revendications 1 à 5, **caractérisé en ce que** le dispositif de lubrification comprend une double paroi (335, 336) entre l'arrivée du lubrifiant et les trous de sortie (220, 331).

8. Pignon (2, 3) selon la revendication précédente, **caractérisé en ce qu'**une des deux parois (335, 336) comprend des rainures.

9. Pignon (2, 3) selon la revendication 4, **caractérisé en ce que** le dispositif de lubrification est disposé entre les dents du pignon et l'arbre du pignon.

10. Dispositif d'engrènement de deux pignons comprenant au moins un pignon (2, 3) selon une des revendications précédentes.

## Patentansprüche

1. Hohles Zahnrad (2, 3), das sich um eine Achse erstreckt, mit einer Welle und Zähnen (20, 30), die von einem Steg getragen werden, der sich um die Welle erstreckt, und einer Schmiervorrichtung, wobei die Schmiervorrichtung einen separaten Kranz bildet, der an der Welle befestigt ist, mit einem wellenseitigen Öleinlass in der Drehachse des Zahnrads, wobei das Zahnrad so konfiguriert ist, dass der Schmierstoffeinlass in der Drehachse des Zahnrads erfolgt, dass er durch die Zentrifugalkraft an die Innenwände des Zahnrads gedrückt wird und bis zu einem dafür vorgesehenen Rand (21, 31, 32) absinkt, wodurch ein Reservoir (40) und ein Ölauslass auf der Seite der Eingriffsverzahnung realisiert werden können, und einen Schmierstoffeinlass in Fluidverbindung mit einem Schmierkreislauf der Welle umfasst, wobei die Schmiervorrichtung Auslasslöcher (220, 331) umfasst, die zwischen zwei Zähnen (20, 30) des Zahnrads münden.

2. Zahnrad (2, 3) nach Anspruch 1, **dadurch gekennzeichnet, dass** die Auslasslöcher (220, 331) einer Vertiefung (200, 300) zwischen zwei Zähnen (20, 30) gegenüberliegend angeordnet sind.

3. Zahnrad (2, 3) nach dem vorhergehenden Anspruch, **dadurch gekennzeichnet, dass** die Anzahl der Auslasslöcher (220, 331) gleich der Anzahl der Vertiefungen (200, 300) ist.

4. Zahnrad (2, 3) nach einem der vorhergehenden Ansprüche, **dadurch gekennzeichnet, dass** das Ritzel konisch ist.

5. Zahnrad (2, 3) nach einem der vorhergehenden Ansprüche, **dadurch gekennzeichnet, dass** die Schmiervorrichtung konisch geformt ist mit einer Basis, die den Schmierstoffeinlass umfasst, und einer Spitze, die die Auslasslöcher (220, 331) umfasst, und wobei die Basis einen inneren Umfangsabschnitt bildet und die Spitze einen äußeren Umfangsabschnitt (22, 34) bildet.

6. Zahnrad (2, 3) nach einem der vorhergehenden Ansprüche, **dadurch gekennzeichnet, dass** die Schmiervorrichtung mehrere getrennte Verteilungsleitungen zwischen dem Schmierstoffeinlass und den Auslasslöchern (220, 331) umfasst.

7. Zahnrad (2, 3) nach einem der Ansprüche 1 bis 5, **dadurch gekennzeichnet, dass** die Schmiervorrichtung eine Doppelwand (335, 336) zwischen dem Schmierstoffeinlass und den Auslasslöchern (220, 331) umfasst.

8. Zahnrad (2, 3) nach dem vorhergehenden Anspruch, **dadurch gekennzeichnet, dass** eine der beiden Wände (335, 336) Nuten aufweist.

9. Zahnrad (2, 3) nach Anspruch 4, **dadurch gekennzeichnet, dass** die Schmiervorrichtung zwischen den Zähnen des Zahnrads und der Welle des Zahnrads angeordnet ist.

10. Verzahnungsvorrichtung für zwei Zahnräder mit mindestens einem Zahnrad (2, 3) nach einem der vorhergehenden Ansprüche.

## Claims

1. A hollow pinion (2, 3) extending about an axis, comprising a shaft and teeth (20, 30) carried by a web which extends around the shaft and a lubrication device, wherein the lubrication device forms a separate ring gear attached to the shaft with an oil inlet on the shaft side along the axis of rotation of the pinion, the pinion is configured so that the lubricant intake is made along the axis of rotation of the pinion, it is pressed against the internal walls of the pinion by centrifugal force and descends to a rim (21, 31, 32) provided for this purpose thus making it possible to create a reservoir (40) and an oil outlet on the meshing teeth side and comprises a lubricant intake in fluid communication with a lubrication circuit of the shaft, the lubrication device comprising outlet holes (220, 331) which open out between two teeth (20, 30) of the pinion.

2. The pinion (2, 3) according to claim 1, **characterised in that** the outlet holes (220, 331) are placed opposite a recess (200, 300) between two teeth (20, 30).

3. The pinion (2, 3) according to the preceding claim, **characterised in that** the number of outlet holes (220, 331) is equal to the number of recesses (200, 300).

4. The pinion (2, 3) according to one of the preceding claims, **characterised in that** the pinion is a bevel pinion.

5. The pinion (2, 3) according to one of the preceding claims, **characterised in that** the lubrication device is conical in shape with a base which comprises the lubricant intake and an apex which comprises the outlet holes (220, 331) and wherein the base constitutes an inner peripheral portion and the apex constitutes an outer peripheral portion (22, 34).

6. The pinion (2, 3) according to one of the preceding claims, **characterised in that** the lubrication device comprises a plurality of separate distribution ducts between the lubricant intake and the outlet holes (220, 331).

7. The pinion (2, 3) according to one of claims 1 to 5, **characterised in that** the lubrication device comprises a double wall (335, 336) between the lubricant intake and the outlet holes (220, 331).

8. The pinion (2, 3) according to the preceding claim, **characterised in that** one of the two walls (335, 336) comprises grooves.

9. The pinion (2, 3) according to claim 4, **characterised in that** the lubrication device is disposed between the pinion teeth and the pinion shaft.

10. A device for meshing two pinions comprising at least one pinion (2, 3) according to one of the preceding claims.
